# EUROPEAN PATENT APPLICATION

(11) **EP 4 249 892 A1**
(43) Date of publication of application: **27.09.2023**
(21) Application number: 21895199.4
(22) Date of filing: 17.11.2021
(51) Int. Cl.: G01N 15/10, G06T 7/00, C12M 1/34, C12M 3/00

(54) **SYSTEM FOR REAL-TIME AUTOMATIC QUANTITATIVE EVALUATION, EVALUATION AND/OR RANKING OF INDIVIDUAL SPERM, INTENDED FOR INTRACYTOPLASMIC SPERM INJECTION (ICSI) AND OTHER FERTILIZATION PROCEDURES, WHICH ALLOWS THE SELECTION OF A SINGLE SPERM**

(30) Priority: 17.11.2020 US 202063115019 P; 01.05.2021 US 202117246633
(71) Applicant: Chavez Badiola, Alejandro, Zapopan, Jalisco, 45221 (MX)
(72) Inventor: Chavez Badiola, Alejandro, Zapopan, Jalisco, 45221 (MX)
(74) Representative: Temiño Ceniceros, Ignacio
(86) International application number: PCT/MX2021/050076
(87) International publication number: WO 2022/108436

(57) **Abstract**

The present invention advantageously remedies the previously mentioned shortcomings by providing a system based on artificial vision and artificial intelligence, which is capable of assisting an embryologist to select the best spermatozoa for injection during an ICSI procedure and other fertilisation procedures requiring the selection of a single sperm. The system of the invention is capable of identifying the best spermatozoa in a sample, in real time, on the basis of their morphological and motility characteristics observed under a microscope with magnification greater than or equal to 20x. The invented system automatically analyses sequences of images produced by a digital camera connected to a microscope, in real time. The system uses computer-based vision algorithms to automatically detect and trace each spermatozoon in each image of a video and calculate a series of characteristics related to morphological characteristics and motility parameters. The characteristics of each sperm are processed and then evaluated using a mathematical model that determines the quality of each sperm and consequently rates them. The rating result is shown to the user in real time, together with a visual indication of which spermatozoa have the best quality in the sample from the image.

## Description

### BACKGROUND

Intracytoplasmic sperm injection (ICSI) is a procedure performed in an embryology laboratory during in vitro fertilization (IVF) treatment in which a single sperm is injected directly into an oocyte to aid in the successful fertilization of an oocyte and generate an embryo. During ICSI, an embryologist selects what he or she determines to be the best sperm to inject directly into the oocyte. Sperm are subjectively selected by evaluating the morphology (shape) and progression (movement) of the sperm (sperm) from a sample drop. The selected sperm is then aspirated from the sperm sample into a microtool called an ICSI needle. Once the sperm is in the ICSI needle, the embryologist moves it into a drop of medium containing the oocyte to be fertilized. The egg to be injected is held in place by a holding pipette, which exerts a slight suction on the oocyte, allowing the embryologist to place the oocyte in the preferred injection position. The embryologist then lines up the ICSI needle with the sperm with the oocyte. The ICSI needle is pressed into the side of the egg below the polar body. The zona pellucida and oolemma are punctured and a small part of the ooplasm is aspirated into the needle to rupture the membrane and inject the sperm into the oocyte. Embryologists typically perform multiple ICSI procedures in one session, depending on the number of mature oocytes retrieved during that cycle. ICSI is widely used in fertility clinics and is often the method of choice even in cases where male infertility is not a factor.

The success rates of ICSI procedures are highly dependent on the quality of the oocytes and sperm. There is published evidence that poor semen parameters result in low blastocyst formation rates after in vitro fertilization, suggesting that sperm may influence human embryo development prior to implantation. There are different strategies available to select the best sperm from a sample. Most of these strategies are designed to achieve sample enrichment in high-quality sperm in the shortest possible time using sperm preparation techniques, which are capable of removing immobile and low-quality sperm. Examples of these techniques include (a) swim-up and its variants that are based on the recovery of motile sperm migrating into a cell-free medium usually placed on top of the sperm sample, and (b) density gradient centrifugation and its techniques, variants that are based on the ability of motile sperm to progress through a density gradient made up of colloidal particles during centrifugation. It is important to note that these strategies increase the chances that a given sperm in the processed sample will have good quality, however, they do not provide any guidance or assistance in selecting the best sperm to inject among all those present in the sample.

Spermatozoa with adequate spermatogenesis and maturation have been shown to have binding sites for hyaluronic acid (HA), which is one of the main components of the extracellular matrix surrounding the cumulus-oocyte complex. Therefore, two approaches based on the interaction of sperm with HA have been proposed: (a) collecting sperm that are slowly moving by swimming in a medium containing HA, and (b) retrieving sperm trapped on the surface of sperm. HA-coated plates. The biggest drawback to these approaches is the requirement for additional components, such as coated plates, which are expensive and may not be available in all IVF clinics. In addition, there are studies that question the usefulness of sperm selection based on HA binding.

Intracytoplasmic Morphologically Selected Sperm Injection (IMSI) is a technique for selecting sperm that is based on an examination of the morphology of the motile sperm organelles at high magnification (above 600x) that allows the embryologist to manually discriminate sperm They lack vacuoles. However, to achieve such large magnifications, special equipment (in addition to the required microscope and manipulators) is necessary, which may not be available in most clinics. Also, the technique does not conform to standard ICSI, but adds an extra step to operate at high magnification.

Some recent approaches are based on the use of microfluidics, which is justified on several grounds, such as the rheotaxis, chemotaxis, and thermotaxis properties of spermatozoa. While preliminary results from such approaches are encouraging, they also require the use of expensive specialty microfluidic devices that limit universal acceptance.

The present invention advantageously fills the aforementioned deficiencies by providing a system based on artificial vision and artificial intelligence that is capable of helping the embryologist to select the best sperm to be injected during an ICSI procedure and other fertilization procedures that require the selection of a single sperm.

This invention is capable of identifying the best spermatozoa in a sample, in real time, based on their morphological and motility characteristics that are observed under the microscope with magnifications equal to or greater than 20x.

The invented system performs an automatic analysis of image sequences produced by a digital camera connected to a microscope in real time. The system uses computer vision algorithms to automatically detect and track each of the spermatozoa present in each image of a video and calculate a series of characteristics related to morphological characteristics and motility parameters. The characteristics of each sperm are processed and then evaluated using a mathematical model that determines the quality of each sperm and classifies them accordingly.

The result of the classification is displayed to the user in real time along with a visual indication of which sperm have the highest quality in the image sample.

In this document, real time refers to the ability of the system to process individual images of a video stream generated by the camera microscope in less than 500 milliseconds after their acquisition. This ability allows the system to calculate and identify the movement patterns of individual sperm with high precision, which is crucial to determine their quality. Furthermore, this capability allows the user to identify and select the highest ranking sperm almost instantly and without requiring a change to existing operating procedures.

The advantage of using the Al approach is that a successful outcome may be more likely when a top-ranked sperm is injected compared to sperm that received a low rank, or sperm subjectively selected by an embryologist. The foundation of this statement is related to the fact that the proposed system calculates motility and morphological characteristics in a deterministic and quantitative way. Also, while the human eye can assess a sperm cell very well, it has difficulty tracking many sperm cells simultaneously and keeping track of when their pathways cross. As a result, embryologists dilute sperm preparations to have only a few sperm in the visual field. With an Al, this limitation is not necessary, as it can survey the entire visual field in milliseconds and track sperm even when their pathways cross. Studies have shown that sperm morphology and motility problems are associated with DNA damage [1], DNA damage is thought to negatively affect oocyte fertilization [2], reduce embryo quality, and increase the possibility of spontaneous abortion [3].

Furthermore, it is well accepted that sperm motility is an essential criterion for determining male fertility potential. One of these motility parameters is the rotational movement of sperm (RMS) around its longitudinal axis that promotes rheotaxis, which is a mechanism that allows sperm to navigate to the fertilization site [4], RMS velocity can be used to distinguish between normal and abnormal sperm [5], which can be used in combination with other characteristics to generate an index that can be used to assess the quality of individual sperm. Note that it would be difficult for an embryologist to distinguish the morphology and motility characteristics that may determine whether or not fertilization can be achieved, as sperm are often poorly visualized in samples during ICSI. Also, the oocytes must be injected quickly, as they must be kept out of the incubators during the procedure.

The proposed invention can be integrated with existing equipment found in most IVF laboratories and does not require other assets such as special chemical compounds, microfluidic devices, or custom-designed Peth plates. Its design allows for the incorporation and use of mixed realities (for example, augmented reality and artificial reality), to adapt to individual preferences and available technologies.

Together with the real-time sperm selection wizard, the system generates a report of the evaluated sperm, which is stored as a file in a readable format.

The proposed invention can be used to develop applications for training, quality assurance and quality control purposes. For example, a video stream of sperm samples previously analyzed with the proposed system can be presented to a user on a web page, mobile phone, tablet or PC application, to select the best sperm for injection without knowing the quality scores. determined by the sperm in the videos. These competition scores can be used to determine how well a user is performing sperm selection.

### DESCRIPTION

The present invention will now be described in more detail below with reference to the accompanying drawings, which are intended to be read in conjunction with this abstract, the detailed description, and any particular and/or preferred embodiments specifically discussed or otherwise disclosed. However, this invention can be embodied in many different ways and should not be construed as limited to the embodiments set forth herein; rather, these embodiments are provided by way of illustration only and so that this description is thorough, complete, and fully conveys the full scope of the invention to those skilled in the art.

### Brief description of the figures:

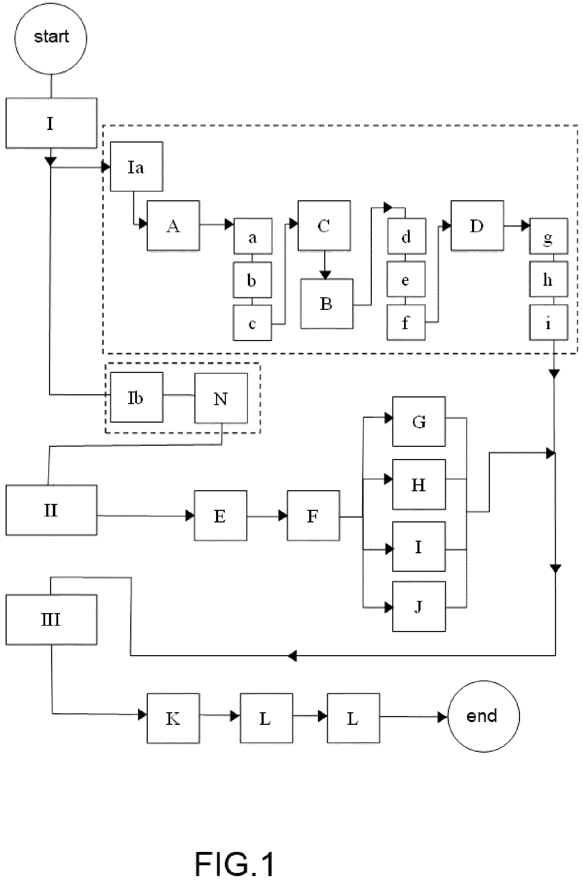

- Figure 1.: This diagram represents the system for real-time automatic quantitative evaluation, assessment and/or classification of individual spermatozoa, with the aim of optimizing intracytoplasmic sperm injection (ICSI) and other fertilization procedures, which require the selection of a single spermatozoon..
- Figure 2.: It is a representation of the equipment (camera and microscope) that generates the images of the system for the evaluation, assessment and / or automatic quantitative classification in real time of individual spermatozoa, with the aim of optimizing intracytoplasmic sperm injection (ICSI). ), and other fertilization procedures, which require the selection of a single sperm.
- Figure 3.: Procedure I is a representation of semantic segmentation of spermatozoa in the video sequence.

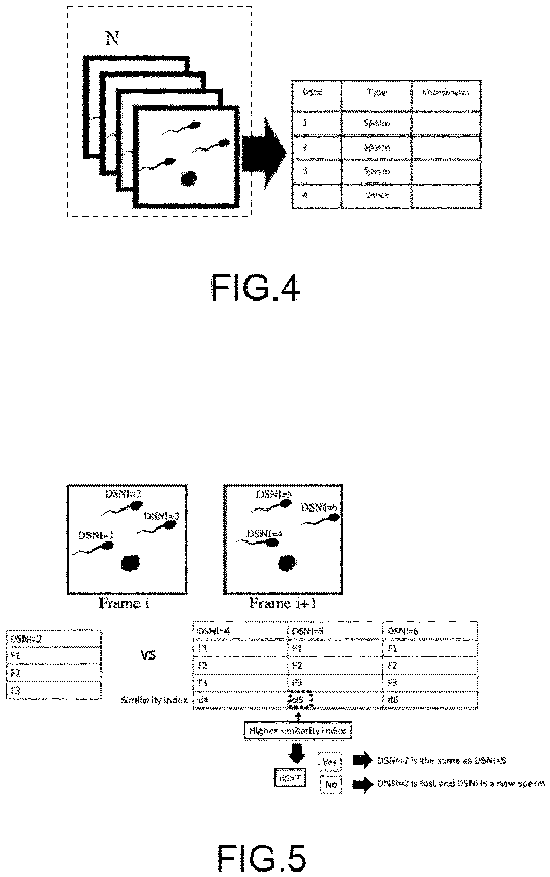

- Figure 4.: Procedure I is a representation of the semantic segmentation of sperm in the video sequence using a neural network architecture.
- Figure 5.: Procedure II is a representation of the process to verify the correspondence of the identity of a sperm within successive frames.

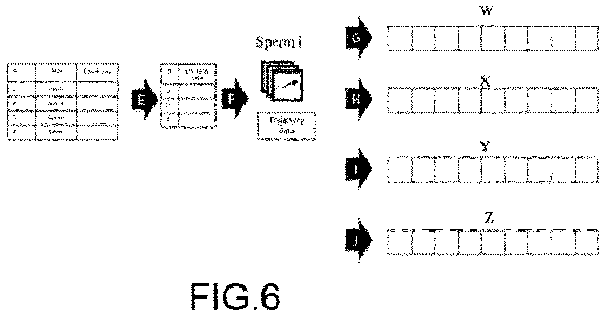

- Figure 6.: Represents a diagram with examples of inputs and outputs for each step of procedure II.

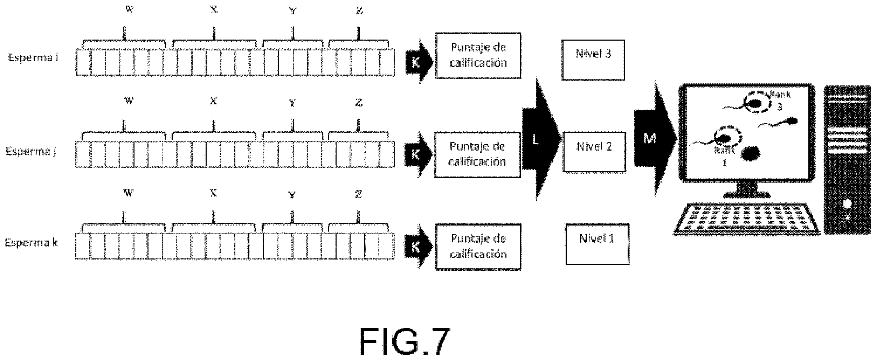

- Figure 7.: Shows a diagram with examples of inputs and outputs for each step of procedure III.

According to the above figures, the real-time automatic quantitative evaluation, assessment and / or classification system of individual spermatozoa, intended for intracytoplasmic sperm injection (ICSI), and other fertilization procedures, which allows the selection of a single spermatozoon, requires a conventional method, sample preparation consisting of following sperm collection and regardless of production method (eg masturbation, prostate massage, surgical removal) the following steps are generally followed prior to sperm selection for ICSI:
a. The semen sample is prepared using standard sperm capacitation techniques including centrifugation and swim-up, gradients or microfluidics (WHO REF manual). This step is usually skipped when sperm are present at low concentrations without the presence of plasma seminal, as is the case when the spermatozoa have been recovered surgically.
b. For manipulation, sperm are placed in specialized culture media. As an example, a common preparation employs a 10 pL drop with the Multipurpose Handling Medium (MHM) solution.
c. A commonly employed step involves transferring several sperm aspirated from the previous preparation and released into a new drop with a specialized solution intended to reduce sperm motility. A commonly used medium for such a purpose is a solution of polyvinylpyrrolidone (PVP) with or without HSA (Human Serum Albumin).
d. Other methods may be added as part of the sperm preparation and selection process. These may include, but are not limited to the use of hyaluronic acid binding, magnetically activated cell sorting (MACS), microfluidics, and surface charge Zeta potential.

The preparation steps listed above are not mandatory and, when applicable, can be used as stand-alone steps or in combination with other steps not included in this description. Sperm preparation protocols may vary based on individual laboratory protocols.

Once the sample has been prepared following the description, the automatic quantitative evaluation system in real time, assessment and/or classification of individual spermatozoa, aimed at ICSI or other fertilization procedures, requires the selection of a single spermatozoon, and includes the stages of:
I. Localization of sperm in images. Which can comprise two different image inputs the. Image processing by digital filters; he
II. Image processing using convolutional neural networks;
III. Characterization of sperm patterns; AND
IV. Evaluation of the quality of the spermatozoa and generation of the recommendation of the best spermatozoa to inject.

Where to start the previous process, it is required to prepare the sample before taking images to be processed in the microscope.

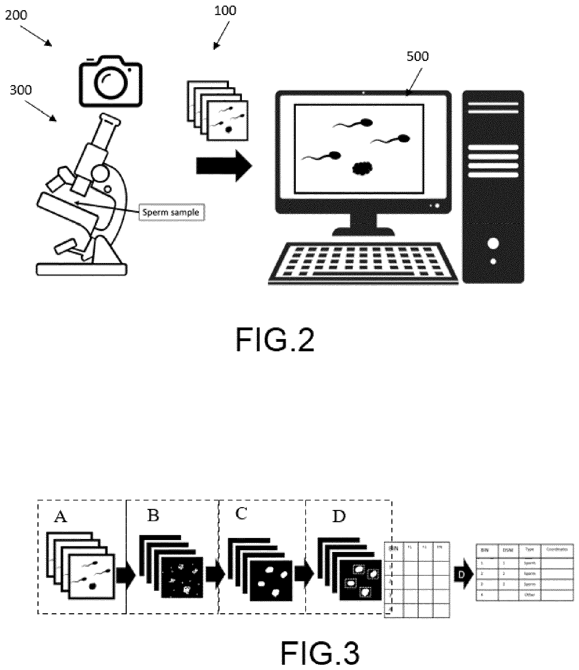

The invented system takes as input a sequence of images or frames. These images 100 can come from a conventional digital camera 200, or an image scanner that is connected to a camera on the microscope 300 where the sperm sample is observed or delivered to the system as a video file (Figure 2).

The system for real-time automatic quantitative evaluation, assessment and/or classification of individual spermatozoa, aimed at ICSI, and other fertilization procedures, which require the selection of a single spermatozoon, consists of three parts:
STAGE I. LOCATION OF SPERM IN IMAGES. Once at least two images 100 have been obtained, they can be processed in either of the following two ways:
   I a. IMAGE PROCESSING THROUGH DIGITAL FILTERS.
      In this stage, each of the images 100 consists of a matrix of pixels of size n x m, which represents the image that is being observed by the microscope at a given instant; in each pair of matrices 101 and 102, the first matrix 101 is compared with the second 102, establishing the differences in the intensity values of each pixel; this difference makes it possible to establish a parameter that is compared with a predefined value that determines if the changes between the first arrangement 101 and the other 102 are significant and therefore evidence a possible movement of an element in the microscope. Then it is necessary to discriminate between those movements that are real or not, in such a way that if the difference only occurs in one pixel, then it is digital noise and if the movement is from a set in the neighborhood of changes, then it is a actual movement; the real movements are represented in a third arrangement 103 whose inputs are a set of movement registers R1, this process is repeated with the total set of images 100, in such a way that all R1 are registered as a set of indicators, among which are , dimension, area, eccentricity, height, width, convexity, etc. in such a way that these indicators are compared with pre-established patterns to determine their nature, among which they can be characterized as spermatozoa, manipulation pipette, epithelial cells just to mention a few and only those that represent spermatozoa that are associated with their indicators are selected in the R2 record, such that these R2 records pass to the next stage;
   lb. IMAGE PROCESSING THROUGH CONVOLUTIONAL NEURAL NETWORKS.
      The images 100 are provided to a convolutional neural network N, which is located in a conventional logic processing unit 104 where a mathematical algorithm is housed that allows the association of specific indicators among which are dimension, area, eccentricity, height, width, convexity, among others; in such a way that these indicators are compared with pre-established patterns to determine their nature, in which they can be characterized as spermatozoa, manipulation pipette, epithelial cells, just to mention a few, and only those that represent spermatozoa that are associated with their indicators are selected in the R2 record, such that these R2 records have a unique identification number D1 and are provided to the next stage;
STAGE II. CHARACTERIZATION OF SPERM PATTERNS.

At this stage, we seek to identify the trajectory of each spermatozoon and characterize it to turn it into indicators, at least of trajectory, morphological characteristics such as head, tail, head movement patterns, tail movement patterns and include:
The R2 records of STAGE II are compared (which can be through conventional arithmetic operations) in such a way that it is possible to establish a correspondence relationship between the parameters associated with each spermatozoon in such a way that if the correspondence is significant, the T1 trajectory is established by means of coordinates of a Cartesian plane, associated to each register R2, thus establishing a sequence of coordinates S1 that are translated as a geometric trajectory; but if the correspondence is not significant through the unique record of each spermatozoon, it allows to define if it is a spermatozoon that enters the visual field of the microscope 300 or that it is one of those that were previously in said visual field; in such a way that now each R1 record is associated with a T1 trajectory, since each of these could be present and associated with different R1 records which are discriminated by the D1 identifier; With these R1 + D1 + T1 associations, a digital representation 400 is generated for each sperm in the processing logic unit 104, and provided to different threads:
a. Thread of generation of descriptors of trajectory patterns W, in each association R1 + D1 + T1 of each spermatozoon, allows to generate at least one indicator such as speed, trajectory, linearity, curvature; b. Thread for the generation of X movement pattern descriptors, in each 400 digital representation of each spermatozoon, allows generating at least one indicator of head movement, tail movement;
b. Thread of characterization of the morphology of the sperm Y, in each digital representation 400 of each sperm, allows to characterize it at least one indicator of the shape of the head, size of the tail, presence of anomalies;
c. The Z texture characterization thread, using at least one set of Laws masks, allows sperm to be characterized by their textures;

All these records have uniquely characterized each sperm as R1 + D1 + T1 is associated with at least their trajectory pattern descriptors W, movement pattern descriptors X, sperm morphology characterization Y, and texture Z, generating a digital array P that represents the input of the next stage of the process;

### STAGE III. EVALUATION OF SPERM QUALITY AND GENERATION OF RECOMMENDATION OF THE BEST SPERM TO INJECT.

In this stage, it is sought to relate the indicators generated in STAGE II with a quality index for each analyzed spermatozoon, which allows defining a recommended order for the selection of spermatozoa to be injected, which is presented on the computer screen 500 in where the analysis is performed.

The digital context P that identifies each sperm is provided to a mathematical algorithm that determines an index Q for each sperm, which represents the quality of the sperm. The values of the Q indices of all the analyzed spermatozoa are ordered to generate a list R preferably from highest to lowest, in such a way that the first elements of the list correspond to the highest quality spermatozoa to provide a live product of pregnancy. Finally, a set of sperm (preferably at least three) with the listed Q-index values (those with the highest indices) is identified and a digital indicator is generated for each of the sperm based on their R2 record. and corresponding S1. , which is superimposed on the most recently acquired image 100 and is displayed on the screen 500 of the computer where the analysis is performed.

Therefore, when a user requests the system's assistance in selecting the best sperm to inject during an ICSI procedure, the system performs: K. calculating a quality metric for each sperm; L the calculation of a classification of the quality of the detected spermatozoa; and M. the denotation for the user of the best ranked sperm.

The calculation of a quality metric for each sperm (K process) consists of assigning a numerical value to each sperm by evaluating the sets W, X, Y and Z using a mathematical model that can be generated by an expert or by using the Machine learning or artificial intelligence algorithms include, but are not limited to, neural networks, linear classifiers, probabilistic classifiers, trees, logistic regression, clustering methods, and deep learning classifiers.

Calculating a quality rating of the detected sperm (process L) consists of ranking the sperm based on the quality metric generated in step K.

The denotation for the user of the highest ranked sperm (M) consists of, based on the measurements and ranking, superimposing graphical elements on the locations of the selected sperm in each frame of the video sequence in real time and displaying them to the user, from system invented by using 500. Examples of 500 include a computer screen, mobile phone, tablet, or with a virtual or augmented reality headset or glasses.

## Claims

1. A system for the evaluation, assessment, and/or automatic quantitative classification in real-time of individual sperm, intended for intracytoplasmic sperm injection (ICSI) and other fertilization procedures, requiring the selection of a single sperm to implement a method to select a sperm comprising:
i. An apparatus for obtaining images, which may be a camera or a microscope, whose images obtained from a previously prepared sample is provided to
ii. a logical processing unit where
iii. a mathematical algorithm based on artificial intelligence, such as convolutional neural networks or algorithms type machine learning which assigns a set of indicators to each sperm allowing to establish a ranking among them in order to
iv. select and separate that sperm that results with the optimal indicators to achieve successful fertilization.
v. select and separate that sperm that results with the optimal indicators to achieve successful development to the blastocyst stage.
vi. select and separate that sperm that results with the optimal indicators to achieve a successful pregnancy.

2. A method to assign real-time automatic quantitative evaluation, titration and/or classification of individual spermatozoa, aimed at intracytoplasmic sperm injection (ICSI), and other fertilization procedures, requiring the selection of a single spermatozoon comprising the stages of:
I. Location of sperm in images. Which can comprise two different image inputs: the. Image processing using digital filters. he b. Image processing using convolutional neural networks.
II. Characterization of sperm patterns; and
III. Evaluation of the quality of the spermatozoa and generation of the recommendation of the best spermatozoa to inject where:
STAGE I. LOCATION OF SPERM IN IMAGES. Once at least two images 100 have been obtained, they can be processed in either of the following two ways:
I a. IMAGE PROCESSING THROUGH DIGITAL FILTERS.
In this stage, each of the images 100 consists of a matrix of pixels of size n x m, which represents the image that is being observed by the microscope at a given instant; in each pair of matrices 101 and 102, the first matrix 101 is compared with the second 102, establishing the differences in the intensity values of each pixel; this difference makes it possible to establish a parameter that is compared with a predefined value that determines if the changes between the first arrangement 101 and the other 102 are significant and therefore evidence a possible movement of an element in the microscope. Then it is necessary to discriminate between those movements that are real or not, in such a way that if the difference only occurs in one pixel, then it is digital noise and if the movement is from a set in the neighborhood of changes, then it is a actual movement; the real movements are represented in a third arrangement 103 whose inputs are a set of movement registers R1, this process is repeated with the total set of images 100, in such a way that all R1 are registered as a set of indicators, among which are , dimension, area, eccentricity, height, width, convexity, etc. in such a way that these indicators are compared with pre-established patterns to determine their nature, among which they can be characterized as spermatozoa, manipulation pipette, epithelial cells just to mention a few and only those that represent spermatozoa that are associated with their indicators are selected in the R2 record, such that these R2 records pass to the next stage;
lb. IMAGE PROCESSING THROUGH CONVOLUTIONAL NEURAL NETWORKS.
The images 100 are provided to a convolutional neural network N, which is located in a conventional logic processing unit 104 where a mathematical algorithm is housed that allows the association of specific indicators among which are dimension, area, eccentricity, height, width, convexity, among others; in such a way that these indicators are compared with pre-established patterns to determine their nature, in which they can be characterized as spermatozoa, manipulation pipette, epithelial cells, just to mention a few, and only those that represent spermatozoa that are associated with their indicators are selected in the R2 record, such that these R2 records have a unique identification number D1 and are provided to the next stage;
STAGE II. CHARACTERIZATION OF SPERM PATTERNS.
At this stage, we seek to identify the trajectory of each spermatozoon and characterize it to turn it into indicators, at least of trajectory, morphological characteristics such as head, tail, head movement patterns, tail movement patterns and include:
The R2 records of STAGE II are compared (which can be through conventional arithmetic operations) in such a way that it is possible to establish a correspondence relationship between the parameters associated with each spermatozoon in such a way that if the correspondence is significant, the T1 trajectory is established by means of coordinates of a Cartesian plane, associated to each register R2, thus establishing a sequence of coordinates S1 that are translated as a geometric trajectory; but if the correspondence is not significant through the unique record of each spermatozoon, it allows to define if it is a spermatozoon that enters the visual field of the microscope 300 or that it is one of those that were previously in said visual field; in such a way that now each R1 record is associated with a T1 trajectory, since each of these could be present and associated with different R1 records which are discriminated by the D1 identifier; With these R1 + D1 + T1 associations, a digital representation 400 is generated for each sperm in the processing logic unit 104, and provided to different threads:
a. Thread of generation of descriptors of trajectory patterns W, in each association R1 + D1 + T1 of each spermatozoon, allows to generate at least one indicator such as speed, trajectory, linearity, curvature; b. Thread for the generation of X movement pattern descriptors, in each 400 digital representation of each spermatozoon, allows generating at least one indicator of head movement, tail movement;
b. Thread of characterization of the morphology of the sperm Y, in each digital representation 400 of each sperm, allows to characterize it at least one indicator of the shape of the head, size of the tail, presence of anomalies;
c. The Z texture characterization thread, using at least one set of Laws masks, allows sperm to be **characterized by** their textures;
All these records have uniquely characterized each sperm as R1 + D1 + T1 is associated with at least their trajectory pattern descriptors W, movement pattern descriptors X, sperm morphology characterization Y, and texture Z, generating a digital array P that represents the input of the next stage of the process;
STAGE III. EVALUATION OF SPERM QUALITY AND GENERATION OF RECOMMENDATION OF THE BEST SPERM TO INJECT.
In this stage, it is sought to relate the indicators generated in STAGE II with a quality index for each analyzed spermatozoon, which allows defining a recommended order for the selection of spermatozoa to be injected, which is presented on the computer screen 500 in where the analysis is performed.
The digital context P that identifies each sperm is provided to a mathematical algorithm that determines an index Q for each sperm, which represents the quality of the sperm. The values of the Q indices of all the analyzed spermatozoa are ordered to generate a list R preferably from highest to lowest, in such a way that the first elements of the list correspond to the highest quality spermatozoa to provide a live product of pregnancy. Finally, a set of sperm (preferably at least three) with the listed Q-index values (those with the highest indices) is identified and a digital indicator is generated for each of the sperm based on their R2 record. and corresponding S1. , which is superimposed on the most recently acquired image 100 and is displayed on the screen 500 of the computer where the analysis is performed.
Therefore, when a user requests the system's assistance in selecting the best sperm to inject during an ICSI procedure, the system performs: K. calculating a quality metric for each sperm; L the calculation of a classification of the quality of the detected spermatozoa; and M. the denotation for the user of the best ranked sperm.
The calculation of a quality metric for each sperm (K process) consists of assigning a numerical value to each sperm by evaluating the sets W, X, Y and Z using a mathematical model that can be generated by an expert or by using the Machine learning or artificial intelligence algorithms include, but are not limited to, neural networks, linear classifiers, probabilistic classifiers, trees, logistic regression, clustering methods, and deep learning classifiers.
Calculating a quality rating of the detected sperm (process L) consists of ranking the sperm based on the quality metric generated in step K.
The denotation for the user of the highest ranked sperm (M) consists of, based on the measurements and ranking, superimposing graphical elements on the locations of the selected sperm in each frame of the video sequence in real time and displaying them to the user, from system invented by using 500. Examples of 500 include a computer screen, mobile phone, tablet, or with a virtual or augmented reality headset or glasses.
